# EUROPÄISCHE PATENTSCHRIFT

(11) **EP 2 520 359 B1**
(45) Veröffentlichungstag und Bekanntmachung des Hinweises auf die Patenterteilung: **21.05.2014**
(21) Anmeldenummer: 12163835.7
(22) Anmeldetag: 12.04.2012
(51) Int. Cl.: B01F 5/06, F01N 3/20, B01F 3/04, F01N 3/28

(54) **Mischelement sowie Mischvorrichtung für eine Abgasanlage einer Brennkraftmaschine**
Mixing element and mixing device for an exhaust system of an internal combustion engine
Élément de mélange et dispositif de mélange pour un système d'échappement d'un moteur à combustion interne

(30) Priorität: 04.05.2011 DE 102011075252
(43) Veröffentlichungstag der Anmeldung: 07.11.2012
(73) Patentinhaber: Eberspächer Exhaust Technology GmbH & Co. KG, 66539 Neunkirchen (DE)
(72) Erfinder: Gaiser, Gerd, 72768 Reutlingen (DE)
(74) Vertreter: BRP Renaud & Partner

(56) Entgegenhaltungen:
- WO-A1-2009/157995
- DE-A1- 2 459 355
- DE-A1- 19 501 241
- US-A- 4 034 965
- US-A- 4 208 136
- US-A- 4 753 535
- US-A- 5 484 203

## Beschreibung

Die vorliegende Erfindung betrifft ein Mischelement für eine Mischvorrichtung in einem Abgas führenden Rohr einer Brennkraftmaschine, insbesondere eines Kraftfahrzeuges, mit den Merkmalen des Oberbegriffs des Anspruchs 1. Die Erfindung betrifft weiter eine Mischvorrichtung für eine Abgasanlage einer Brennkraftmaschine mit zumindest einem derartigen Mischelement.

Mischelemente sind häufig verwendete Bauteile in Abgasanlagen für Brennkraftmaschinen. Sie werden, insbesondere bei Brennkraftmaschinen von Kraftfahrzeugen, verwendet, um eine homogene thermische und chemische Verteilung innerhalb einer Abgasströmung der Abgasanlage zu gewährleisten. Mischelemente spielen insbesondere eine grundlegende Rolle bei der Beimischung von ammoniakhaltigen Zusatzstoffen, wie etwa Harnstoff oder "Adblue", zum Abgas. Diese Zusatzstoffe werden insbesondere für die sogenannte selektive katalytische Reduktion (SCR) des Abgases, bei der üblicherweise schädliche Stickoxide in Stickstoff umgewandelt werden, verwendet. Für derartige Reaktionen spielen naturgemäß lokale Konzentrationen und die lokale Temperatur eine entscheidende Rolle. Es ist daher von großer Bedeutung eine homogene Verteilung des Zusatzstoffes und eine homogene Temperaturverteilung innerhalb des Abgas-Zusatzstoff-Gemisches zu gewährleisten, um insbesondere die genannten Reduktionsreaktionen kontrolliert und effektiv ablaufen zu lassen. Dies wird üblicherweise durch Mischelemente in der Abgasanlage sichergestellt.

Aus der US 4 208 136 A ist ein Mischelement für eine Mischvorrichtung in einem Gas führenden Rohr bekannt, wobei das Mischelement zumindest vier Flügel und einen Verbindungsabschnitt aufweist, der zwei Seiten besitzt und von dem die Flügel abgewinkelt sind. Dabei sind zwei bezüglich einer Längsachse des Verbindungsabschnittes direkt benachbarte Flügel zu unterschiedlichen Seiten des Verbindungsabschnittes abgewinkelt. Außerdem sind zwei bezüglich der Längsachse des Verbindungsabschnittes direkt gegenüberliegende Flügel zu unterschiedlichen Seiten des Verbindungsabschnittes abgewinkelt. Das Mischelement ist außerdem mit dem Verbindungsabschnitt und den Flügeln als Blechformteil ausgestaltet. Beim bekannten Mischelement sind die Flügel vom Verbindungsbereich entlang von Kanten abgewinkelt, die sich jeweils senkrecht zur Längsachse des Mischelements erstrecken.

Mischelemente für Abgasanlagen sind aus der WO 2009/157995 A1 und US 4 753 535 bekannt.

Die vorliegende Erfindung beschäftigt sich mit dem Problem, für ein Mischelement der eingangs genannten Art, eine verbesserte oder zumindest alternative Ausführungsform anzugeben, die insbesondere die geforderten Mischforderungen erfüllt und einfach herzustellen ist.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einem Mischelement der genannten Art zumindest vier Flügel vorzusehen, die durch einen Verbindungsabschnitt gekoppelt sind. Dabei weist der Verbindungsabschnitt zwei Seiten auf, welche durch die beiden voneinander abgewandten Oberflächen des Verbindungsabschnittes gebildet sind. Die Erfindung nutzt nun die Erkenntnis, dass benachbarte Flügel, die in unterschiedlichen, durch den Verbindungsabschnitt getrennten, Raumhälften liegen, eine verbesserte Mischung von einem Abgas und einem Zusatzstoff und/oder eine verbesserte Temperaturverteilung innerhalb des Abgas-Zusatzstoff-Gemisches erzielen. Durch diese Anordnung der Flügel wird also insbesondere eine gleichmäßige, das heißt homogene, Verteilung eines Zusatzstoffes innerhalb des Abgases, und/oder eine verbesserte thermische Verteilung, das heißt eine homogene Temperatur, innerhalb des Abgas-Zusatzstoff-Gemisches erzielt. Die Erfindung nutzt weiter die Erkenntnis, dass die Herstellung eines derartigen Mischelements als Blechformteil möglich ist, womit eine besonders günstige Fertigung erreicht wird.

Dem Erfindungsgedanken entsprechend, weist ein Mischelement vier Flügel auf, die durch einen Verbindungsabschnitt miteinander gekoppelt sind. Dabei weist der Verbindungsabschnitt zwei Seiten auf, die durch die Oberflächen des Verbindungsabschnittes definiert sind. Der Verbindungsabschnitt weist weiter eine Längsachse auf, die bedingt durch die Ausdehnung des Verbindungsabschnittes entsprechend der Richtung mit der größten Ausdehnung definiert ist. Die vier Flügel sind nun derart angeordnet, dass zwei bezüglich der Längsachse des Mischelements direkt benachbarte Flügel zu unterschiedlichen Seiten des Verbindungsabschnittes abgewinkelt sind. Weiter sind zwei bezüglich der Längsachse des Mischelements direkt gegenüberliegende Flügel zu unterschiedlichen Seiten des Verbindungsabschnittes abgewinkelt. Das Mischelement ist weiter, insbesondere durch Schneide- und Biegeverfahren, als Blechformteil ausgebildet.

Das erfindungsgemäße Mischelement ist aus einem einzigen zusammenhängenden Blechstück hergestellt. Dabei umfasst die Herstellung insbesondere ein Schneidverfahren und ein Verformungsverfahren. Die Herstellung des Mischelements aus einem einzigen Blechteil führt zu einer besonderes kostengünstigen Herstellung. Die Verwendung von Blech als Material des Mischelements stellt weiter sicher, dass das Mischelement auch bei entsprechender thermischer Beanspruchung eine lange Lebensdauer erreicht.

Eine weitere Ausführungsform des Mischelements weist sechs Flügel auf. Dabei gilt für die Flügel dieser Ausführungsform ebenfalls, dass zwei bezüglich der Längsachse des Mischelements direkt benachbarte Flügel zu unterschiedlichen Seiten des Verbindungsabschnittes abgewinkelt sind. Zwei bezüglich der Längsachse des Mischelements direkt gegenüberliegende Flügel sind ebenfalls zu unterschiedlichen Seiten des Verbindungsabschnittes abgewinkelt. Diese Ausführungsform kann, wie bereits erwähnt, als Blechformteil ausgestaltet sein. Die Ausführungsform kann insbesondere auch aus einem einzigen zusammenhängenden Blechstück, insbesondere durch Schneideverfahren und Verformungsverfahren, hergestellt werden.

Für die Anzahl der Flügel eines Mischelementes gilt gemäß den Gesetzen der Strömungstechnik, dass eine gerade Anzahl vorzugsweise zu wählen ist. Mischelemente mit einer ungeraden Anzahl von Flügeln gehören jedoch ebenfalls zum Umfang dieser Erfindung.

Entsprechend einer weiteren vorteilhaften Ausführungsform kontaktiert das Mischelement einen dem Mischelement zugeordneten Rohrabschnitt zumindest teilweise. Dazu weist zumindest einer der Flügel des Mischelements an einer diesem Flügel zugehörigen außenliegenden Flügelkante eine Außenkontur auf, die komplementär zu einer Innenkontur des dem jeweiligen Flügel zugeordneten Rohrabschnittes geformt ist, wobei die Außenkontur der Flügelkante derart geformt ist, dass der zugehörige Flügel, bei in das Rohr eingesetztem Mischelement, das Rohr mit der Flügelkante kontaktiert. Dies dient insbesondere dem Zweck, das Mischelement einfach und haltend in einem entsprechenden Rohrabschnitt anbringen zu können. Der Kontakt kann dabei sowohl punktuell als auch linienförmig sein. Ein punktueller Kontakt zum Rohrabschnitt weist dabei durch die geringere Wärmeübertragung zwischen Mischelement und Rohrabschnitt eine andere Wärmeübertragung auf, als ein linienförmiger Kontakt, bei dem die Wärmeübertragung zwischen Mischelement und Rohrabschnitt größer ist. Die genaue Ausführung des Kontaktes kann dabei den jeweiligen Bedürfnissen angepasst werden.

Erfindungsgemäß weist der Verbindungsabschnitt eine Pfeilung bezüglich der Längsachse des Mischelements auf, die sich quer zur Längsachse des Verbindungselements erstreckt. Beispielsweise erstreckt sich die Längsachse des Mischelements in eingebautem Zustand parallel zur Hauptströmungsrichtung des Abgases. Die Längsrichtung des Verbindungsabschnittes erstreckt sich dann quer zur Hauptströmungsrichtung des Abgases. Die Pfeilung ist dann in der Hauptströmungsrichtung oder entgegengesetzt der Hauptströmungsrichtung orientiert. Eine derartige Pfeilung führt zu einer entsprechenden Änderung der Flügelorientierungen. Dadurch wird insbesondere durch Erzeugung eines zusätzlichen Wirbels eine bessere Durchmischung des Abgas-Zusatzstoff-Gemisches erzielt.

Es sei darauf hingewiesen, dass die Flügel und der Verbindungsabschnitt eine beliebige Form und Größe aufweisen können. Dabei sei insbesondere auf Flügel hingewiesen, die eine elliptische Form ihrer Außenkante aufweisen. Weisen die Flügel eine spitze Form der zugehörigen Flügelkanten auf, so führt dies insbesondere bei flüssigen Zusatzstoffen, zu einer verbesserten Durchmischung des Zusatzstoffes mit dem Abgas, weil die Tropfen des Zusatzstoffes an den spitzen Flügelkanten zerkleinert werden.

Zumindest ein erfindungsgemäßes Mischelement ist in eine Mischvorrichtung für eine Abgasanlage einer Brennkraftmaschine, insbesondere eines Kraftfahrzeuges, integriert. Dabei ist das Mischelement in einem abgasführenden Rohr der Mischvorrichtung oder der Abgasanlage angeordnet. Somit sorgt die Mischvorrichtung für eine verbesserte Durchmischung des Abgas-Zusatzstoff-Gemisches und/oder für eine verbesserte, das heißt homogene, Temperaturverteilung innerhalb des Abgas-Zusatzstoff-Gemisches.

Bei einer weiteren Ausführungsform weist die Mischvorrichtung eine Hülle auf, die zumindest ein Mischelement umhüllt. Die Umhüllung ist dabei derart, dass zumindest einer der Flügel des Mischelements an einer zugehörigen außenliegenden Flügelkante eine Außenkontur aufweist, die diese Hülle kontaktiert. Dabei sind sowohl punktuelle als auch linienförmige Kontakte zielführend. Somit wird insbesondere ein Halt des Mischelementes in der Hülle gewährleistet. Es versteht sich, dass bei dieser Ausführungsform ein Kontakt zwischen der genannten Flügelkante und eines dem Mischelement zugeordneten Rohrabschnittes nicht möglich ist.

In einer weiteren Ausführungsform ist die Hülle in einem der Hülle zugeordneten Rohrabschnitt einsetzbar. Die Hülle kann weiter diesen Rohrabschnitt kontaktieren, wobei der Kontakt punktuell oder linienartig sein kann. Bei dieser Anordnung strömt das Abgas bevorzugt durch die Hülle. Dabei wird insbesondere bei einem punktuellen Kontakt zwischen Hülle und des der Hülle zugeordneten Rohrabschnittes, insbesondere eine thermische Isolierung zwischen Hülle bzw. Mischelement und Rohrabschnitt gewährleistet.

Die Hülle ist optional mit zumindest einem der Hülle radial angeordneten Flansch ausgestattet. Dadurch sind insbesondere unterschiedliche Abgas führende Rohrabschnitte koppelbar. Als Flansch wird hier insbesondere auf eine Sickendichtung hingewiesen, die zusätzlich zu einer Abdichtung des Aufbaus führt.

Befindet sich eine Hülle mit zumindest einem Mischelement in einem Rohrabschnitt, so kann dieser Rohrabschnitt bei einer weiteren Ausführungsform, eine geänderte Größe und/oder eine geänderte Form gegenüber einem Rohrabschnitt ohne Hülle bzw. Mischelement aufweisen. Diese Ausführungsform dient insbesondere dem Zweck, durch eine entsprechende Änderung der Größe oder Form des Rohrabschnittes mit Hülle bzw. Mischelement, in diesem Rohrabschnitt einen gleichen Abgas führenden Querschnitt zur Verfügung zu stellen.

Weist eine Mischvorrichtung mehrere Mischelemente auf, so können diese Mischelemente hintereinander angeordnet sein. Dabei wird beispielsweise eine Anordnung der Mischelemente bevorzugt, bei der sich die Mischelemente insbesondere axial überlappen bzw. teilweise ineinander angeordnet sind.

Es sei darauf hingewiesen, dass die Mischelemente vorzugsweise derart angeordnet sind, dass ihre Längsachse parallel zu einer Hauptströmungsrichtung des Abgas führenden Rohrs angeordnet sind. Auch sind Ausführungsformen vorteilhaft, bei denen die Längsachse der einzelnen Mischelemente im Wesentlichen parallel zur Hauptströmungsrichtung angeordnet sind.

Dabei können jeweils zwei Flügel eines solchen Mischelements entlang der Hauptströmungsrichtung quer zueinander versetzt angeordnet sein. Ferner sind Ausführungsformen vorteilhaft, bei denen entlang der Hauptströmungsrichtung gegenüberliegende Flügel des Mischelements in der Hauptströmungsrichtung zu unterschiedlichen Seiten des Verbindungsabschnittes abgewinkelt sind. Das heißt, dass die Flächen der, insbesondere aufströmseitigen, Flügel im Wesentlichen frontal vom Abgas angeströmt werden, um eine verstärkte Durchmischung bzw. Verwirbelung des Abgases zu erreichen.

Die einzelnen Mischelemente Weisen eine Pfeilung ihres Verbindungsabschnittes auf. Diese Pfeilung ist vorzugsweise derart ausgebildet, dass sie positiv oder negativ bezüglich der Hauptströmungsrichtung ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Seitenansicht eines Mischelements,
- Fig. 2 und 3: jeweils eine perspektivische Ansicht des Mischelements, bei verschiedenen, nicht unter den Schutz der Ansprüche fallenden Ausführungsformen,
- Fig. 4: eine perspektivische Ansicht einer erfindungsgemäßen Mischvorrichtung,
- Fig. 5 bis 7: jeweils einen Längsschnitt durch die Mischvorrichtung, bei verschiedenen Ausführungsformen.

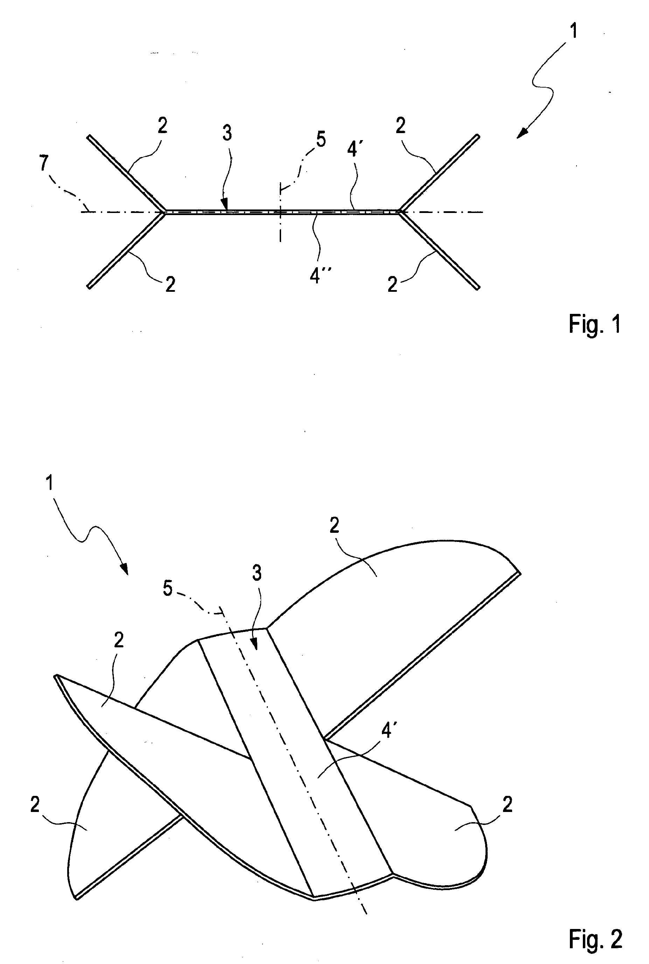

Entsprechend den Fig. 1 bis Fig. 7 weist ein Mischelement 1 zumindest vier Flügel 2 auf, die durch einen Verbindungsabschnitt 3 miteinander gekoppelt sind. Wie in Fig. 1 sowie den Fig. 5 bis Fig. 7 gezeigt, weist der Verbindungsabschnitt 3 weiter zwei Seiten 4', 4" auf, die voneinander abgewandt sind. Entsprechend der in den Fig. 1 und Fig. 5 bis Fig. 7 wiedergegebenen Raumlage des Mischelements 1, können die beiden Seiten 4', 4" auch als Oberseite 4' und Unterseite 4" bezeichnet werden.

Das in Fig. 1 gezeigte Mischelement 1 weist vier Flügel 2 auf, die durch den Verbindungsabschnitt 3 miteinander verbunden sind. Dabei zeigen sowohl die Flügel 2 als auch der Verbindungsabschnitt 3 eine ebene flache Form. Es sind jedoch auch gekrümmte Formen der Flügel denkbar. Weiter weisen alle Flügel 2 die gleiche Größe auf. Die Flügel 2 sind nun derart vom Verbindungsabschnitt 3 abgewinkelt, dass bezüglich einer Längsachse 5 (vgl. Fig. 2 bis 4) direkt benachbarte Flügel 2 gilt, dass einer der Flügel 2 zur einen Seite 4' des Verbindungsabschnittes 3 hin abgewinkelt ist und der andere Flügel 2 zur anderen Seite 4" des Verbindungsabschnittes 3 abgewinkelt ist. Gleiches gilt für sich bezüglich der Längsachse 5 direkt gegenüberliegende Flügel 2, das heißt, dass einer dieser Flügel 2 hin zur einen Seite 4' des Verbindungsabschnittes 3 abgewinkelt ist, und der andere Flügel 2 hin zur anderen Seite 4" des Verbindungsabschnittes 3 abgewinkelt ist. Dabei zeigen alle Flügel 2 den gleichen Winkel zu den jeweiligen Seiten 4', 4" des Verbindungsabschnittes 3, zu denen sie abgewinkelt sind.

Die in Fig. 2 gezeigte Ausführungsform des Mischelements 1 zeigt vier Flügel 2, die durch den Verbindungsabschnitt 3 miteinander verbunden sind. Der Verbindungsabschnitt 3 hat dabei eine längliche flache Form, wobei ihre Längsachse 5 entlang der langen Seite läuft. Dieses Mischelement 1 ist aus einem einzigen zusammenhängenden Werkstück, vorzugsweise aus Blech, insbesondere durch Schneiden und Verformung hergestellt. Das Blechstück weist dabei vor der Verformung eine flache und runde Form auf. Dadurch haben alle Flügel 2 eine gerade Innenkante, die zur Innenseite des Mischelements 1 gerichtet sind und an einer Flügelspitze auf eine runde Außenkante der Flügel 2 stoßen. Die jeweils bezüglich der Längsachse 5 des Verbindungsabschnitts 3 direkt benachbarten Flügel 2 sind derart angewinkelt, dass einer dieser Flügel 2 zur einen Seite 4' des Verbindungsabschnittes 3 hin abgewickelt ist, und der andere Flügel 2 hin zur anderen Seite 4" angewinkelt ist. Auch die bezüglich der Längsache 5 direkt benachbarten Flügel 2 sind derart angewinkelt, dass einer der Flügel 2 hin zu einer Seite 4' des Verbindungsabschnittes 3 und der andere Flügel 2 zur anderen Seite 4"- des Verbindungsabschnittes 3 abgewinkelt ist.

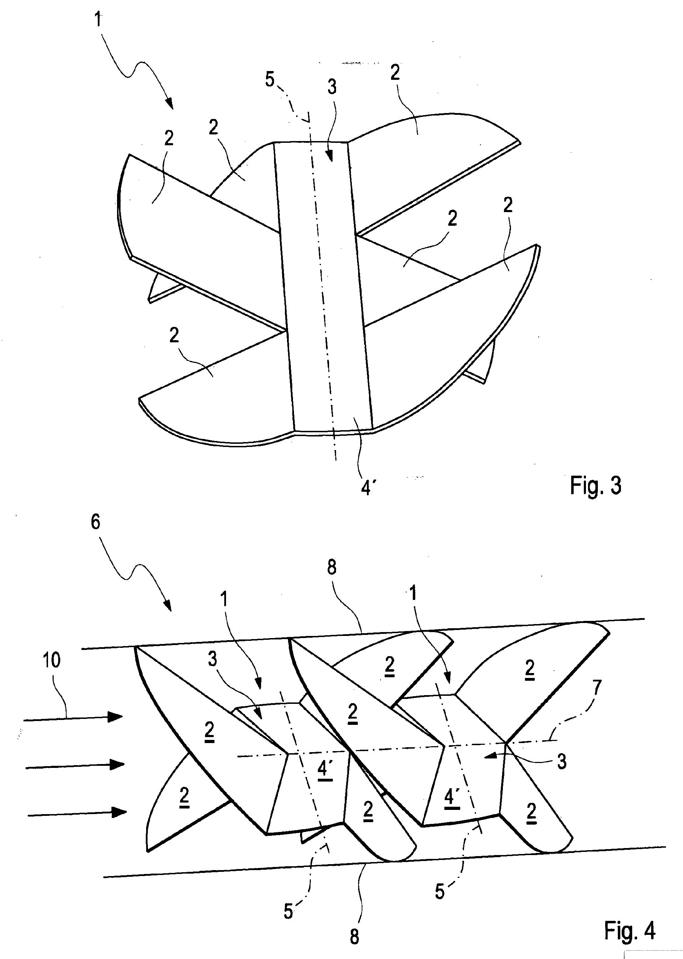

Eine Ausführungsform des Mischelements 1 mit sechs Flügeln 2 ist in Fig. 3 dargestellt. Auch dieses Mischelement 1 kann aus einem einzigen zusammenhängenden, flachen und runden Blechstück geformt werden. Da die Flügel 2 entlang der Längsseiten des Verbindungsabschnittes 3 angeordnet sind, weisen die äußeren Flügel 2 gerade Innenkanten auf, die in einem spitzen Übergang auf gerundete Außenkanten des jeweiligen Flügels 2 treffen. Die auf den jeweiligen langen Seiten des Verbindungsstückes 3 mittleren Flügel 2 weisen jeweils zwei gerade Innenkanten auf, die an Flügelspitzen in runden Außenkonturen dieser Flügel 2 enden. Die jeweils bezüglich der Längsachse 5 des Verbindungsabschnitts 3 direkt benachbarten Flügel 2 sind derart angewinkelt, dass einer dieser Flügel 2 zur einen Seite 4' des Verbindungsabschnittes 3 hin abgewickelt ist, und der andere Flügel 2 hin zur anderen Seite 4" angewinkelt ist. Auch die bezüglich der Längsache 5 direkt benachbarten Flügel 2 sind derart angewinkelt, dass einer der Flügel 2 hin zu einer Seite 4' des Verbindungsabschnittes 3 und der andere Flügel 2 zur anderen Seite 4" des Verbindungsabschnittes 3 abgewinkelt ist.

Fig. 4 zeigt zwei identische Mischelemente 1 einer Mischvorrichtung 6. Die Mischelemente 1 weisen dabei eine Pfeilung bezüglich der Längsachse 7 des jeweiligen Mischelements 1 auf und sind derart angeordnet, dass sie sich teilweise radial überlappen. Die Mischelemente 1 weisen weiter jeweils vier Flügel 2 auf. Für die Flügel 2 der jeweiligen Mischelemente 1 gilt dabei, dass bezüglich der jeweiligen Längsachse 5 direkt benachbarte Flügel 2 jeweils zu einer Seite 4', 4" des Verbindungsstückes 3 abgewinkelt sind. Gleiches gilt für zwei sich bezüglich der Längsachse 5 direkt gegenüberliegende Flügel 2. Die Flügel 2 beider Mischelemente 1 zeigen gerade Innenkanten, die in einer Spitze auf abgerundeten Außenkanten der zugehörigen Flügel 2 treffen. Die Mischelemente 1 sind in einem Rohr 8 angeordnet (das Rohr 8 ist aus Darstellungsgründen als Linie angedeutet), wobei die Außenkanten der Flügel 2 das Rohr 8 teilweise kontaktieren.

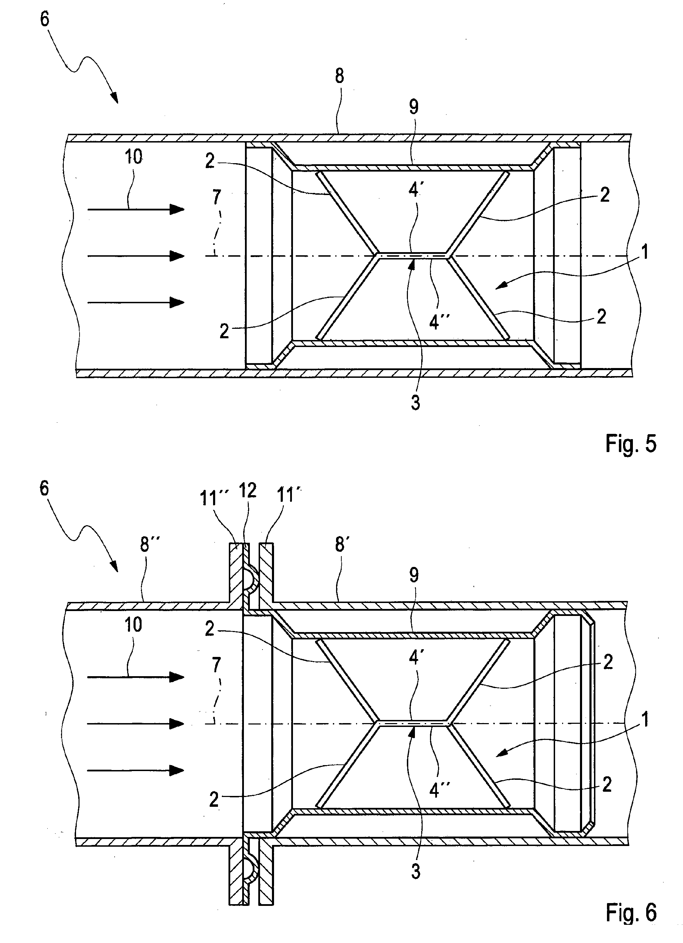

Das in Fig. 5 gezeigte Mischelement 1 einer Mischvorrichtung 6 weist vier Flügel 2 auf, die bezüglich einer Längsachse 5 des Verbindungsabschnittes 3 zu verschiedenen Seiten 4', 4" des Verbindungsabschnittes 3 hin abgewinkelt sind.

Dabei gilt auch hier, dass sich zwei bezüglich der Längsachse 5 direkt gegenüberliegende Flügel 2 oder zwei bezüglich der Längsachse 5 direkt benachbarte Flügel 2 zu unterschiedlichen Seiten 4' und 4" des Verbindungsabschnittes 3 hin abgewinkelt sind. Bei der hier gezeigten Mischvorrichtung 6 kontaktieren die Flügel 2 des Mischelements 1 durch ihre Außenkanten eine sie umhüllende Hülle 9. Dabei füllt das Mischelement 1 die Hülle 9 axial teilweise und mittig. Die Hülle 9 ist weiter derart ausgebildet, dass sie ein dieser Hülle 9 zugeordnetes Rohr 8 linienartig kontaktiert. Dabei kontaktiert die Hülle 9 das Rohr 8 nur in einem Bereich, in dem sich das Mischelement 1 nicht befindet, wodurch in dem Bereich, in dem sich das Mischelement 1 befindet, eine Lücke zwischen der Hülle 9 und dem Rohr 8 entsteht. Die Hülle 9 ist weiter axial kürzer als das Rohr 8, so dass die Hülle 9 das Rohr 8 nur teilweise füllt. Die Hülle 9 und das Mischelement 1 sind nun derart angeordnet, dass die Längsachse 7 des Mischelements 1 parallel zu einer durch Pfeile symbolisierten Hauptströmungsrichtung 10 des Abgases des Abgas führenden Rohrs 8 angeordnet ist. Dabei sind jeweils zwei Flügel 2 des jeweiligen Mischelements 1 entlang der Hauptströmungsrichtung 10 quer zueinander versetzt angeordnet sind, während entlang der Hauptströmungsrichtung 10 gegenüberliegende Flügel 2 in der Hauptströmungsrichtung 10 zu unterschiedlichen Seiten 4', 4" des Verbindungsabschnittes 3 abgewinkelt sind. Somit steht der jeweilige Flügel dem anströmenden Abgas mit einer wesentlicher Fläche "im Weg", so dass eine starke Verwirbelung bzw. Durchmischung des Abgases verursacht wird.

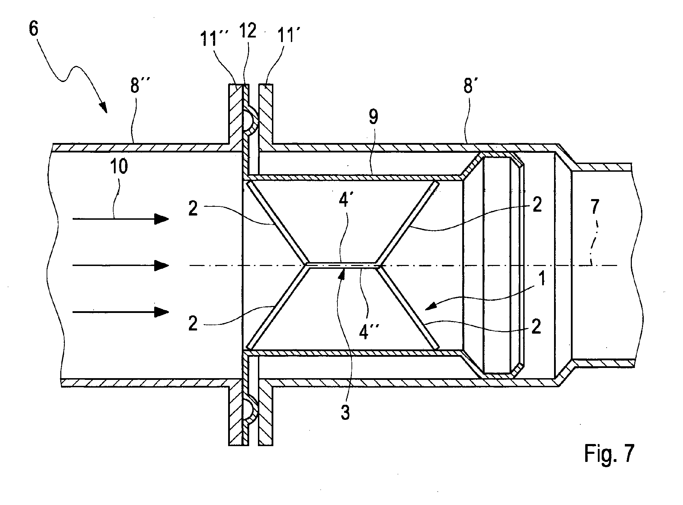

Fig. 6 und Fig. 7 zeigen jeweils eine Mischvorrichtung 6, die jeweils zwei Rohrabschnitte 8' und 8" aufweisen. Weiter weisen beide Mischvorrichtungen 6 jeweils ein Mischelement 1 auf, bei denen zwei bezüglich der Längsachse 5 des zugehörigen Mischelements 1 direkt benachbarte oder direkt gegenüberliegende Flügel jeweils zu unterschiedlichen Seiten 4' und 4" des zugehörigen Verbindungsabschnittes 3 hin abgewinkelt sind. Die jeweiligen Mischelemente 1 sind derart in den jeweiligen Mischvorrichtungen 6 angebracht, dass ihre Längsachse 7 parallel zur Hauptströmungsrichtung 10 verläuft. Weiter sind die jeweiligen Mischelemente 1 der Mischvorrichtungen 6 in einer Hülle 9 angeordnet und füllen diese Hülle 9 dabei axial teilweise. Die Hülle 9 der Mischvorrichtungen 6 ist derart ausgebildet, dass sie auf einer ihrer Seiten, die der linken Seite der in den Fig. 6 und 7 gezeigten Raumlage entspricht, einen der Rohrabschnitte 8' in einem Bereich in dem sich das Mischelement 1 nicht befindet linienartig kontaktiert und ihren dem Mischelement 1 abgewandten Enden vom diesem Rohrabschnitt 8' abgewinkelt ist. Auf der anderen Seite, das heißt der rechten Seite der Hülle 9, kontaktiert die Hülle 9 den Rohrabschnitt 8' linienartig in einem Bereich in dem sich das Mischelement 1 nicht befindet. Damit entsteht in dem Bereich, in dem sich das Mischelement 1 befindet, eine Lücke zwischen der Hülle 9 und dem Rohrabschnitt 8'. Dabei überragt die Hülle 9 den Rohrabschnitt 8' axial hin zum anderen Rohrabschnitt 8". Die Rohrabschnitte 8' und 8" weisen jeweils zwei Flansche 11' und 11" auf, die radial zum zugehörigen Rohrabschnitt 8', 8" angeordnet sind. Dabei sind die Flansche 11' des Rohrabschnittes 8' dem anderen Rohrabschnitt 8" zugewandt und die Flansche 11" des Rohrabschnittes 8" dem Rohrabschnitt 8" zugewandt, derart dass sich jeweils einer der Flansche 11' des Rohrabschnittes 8' einem der Flansche 11" des Rohrabschnittes 8" gegenüberliegt. Die Hülle 9 weist weiter zwei Flansche 12 auf, die jeweils radial zur Hülle 9 angeordnet sind und zwischen den Flanschen 11' und 11" der Rohrabschnitte 8' und 8" liegen. Die Flansche 12 der Hülle 9 zeigen dabei die Form einer Sickendichtung. Diese Ausführungsformen dienen insbesondere einer vereinfachten Montage einer Mischvorrichtung 6.

Der in Fig. 7 gezeigte Rohrabschnitt 8', mit dem die Hülle 9 direkt kontaktiert ist, weist zudem eine Variation der Form und Größe auf. Dabei ist der Radius des Rohrabschnittes 8' in dem Bereich, in dem sich die Hülle 9 bzw. das Mischelement 1 befindet, größer als der Radius des anderen Rohrabschnittes 8". Auf der dem anderen Rohrabschnitt 8" abgewandten Seite des Rohrabschnittes 8', das heißt entlang der Hauptströmungsrichtung 10, verjüngt sich der Rohrabschnitt 8' in einem Bereich in dem sich die Hülle 9 bzw. das Mischelement 1 nicht befindet. Dabei verjüngt sich der Rohrabschnitt 8' soweit, bis ihr Radius, dem Radius des anderen Rohrabschnittes 8" entspricht. Dies dient insbesondere dem Zweck dem Abgas in einem Bereich, in dem sich das Mischelement 1 und/oder Hülle 9 befindet/befinden einen angepassten Querschnitt des Rohrabschnittes 8' zur Verfügung zu stellen, wie in einem Bereich, in dem keine Mischelement 1 und/oder Hülle 9 vorhanden ist/sind.

## Patentansprüche

1. Mischelement (1) für eine Mischvorrichtung (6) in einem Abgas führenden Rohr (8) einer Abgasanlage einer Brennkraftmaschine, mit zumindest vier Flügeln (2) und einem Verbindungsabschnitt (3), der zwei Seiten (4', 4") aufweist und von dem die Flügeln (2) abgewinkelt sind,
- wobei zwei bezüglich einer Längsachse (5) des Verbindungsabschnittes (3) direkt benachbarte Flügel (2) zu unterschiedlichen Seiten (4', 4") des Verbindungsabschnittes (3) abgewinkelt sind,
- wobei zwei bezüglich der Längsachse (5) des Verbindungsabschnittes (3) direkt gegenüberliegende Flügel (2) zu unterschiedlichen Seiten (4', 4") des Verbindungsabschnittes (3) abgewinkelt sind,
- wobei das Mischelement (1) mit dem Verbindungsabschnitt (3) und den Flügeln (2) als Blechformteil ausgestaltet ist,
**dadurch gekennzeichnet,**
**dass** der Verbindungsabschnitt (3) bezüglich der Längsachse (7) des Mischelements (1) eine Pfeilung aufweist.

2. Mischelement nach Anspruch 1,
**dadurch gekennzeichnet,**
**dass** das Mischelement (1) aus einem einzigen zusammenhängenden Blechstück hergestellt ist.

3. Mischelement nach Anspruch 1 oder 2,
**dadurch gekennzeichnet,**
**dass** zumindest einer der Flügel (2) an einer zugehörigen außenliegenden Flügelkante eine Außenkontur aufweist, die komplementär zu einer Innenkontur eines dem jeweiligen Flügel (2) zugeordneten Abschnittes des Rohrs (8) bzw. Rohrabschnittes (8', 8") geformt ist, derart, dass der jeweiligen Flügel (2), bei in das Rohr (8) bzw. dem Rohrabschnitt (8', 8") eingesetztem Mischelement (1), das Rohr (8) bzw. den Rohrabschnitt (8', 8") mit der Flügelkante kontaktiert.

4. Mischvorrichtung (6) für eine Abgasanlage einer Brennkraftmaschine, mit zumindest einem Mischelement (1) nach einem der vorherigen Ansprüche, das in einem Abgas führenden Rohr (8) bzw. Rohrabschnitt (8', 8") der Mischvorrichtung oder der Abgasanlage angeordnet ist.

5. Mischvorrichtung nach Anspruch 4,
**dadurch gekennzeichnet,**
**dass** eine Hülle (9) das Mischelement (1) derart umhüllt, dass zumindest einer der Flügel (2) an einer zugehörigen außenliegenden Flügelkante eine Außenkontur aufweist, die diese Hülle (9) kontaktiert.

6. Mischvorrichtung nach Anspruch 5,
**dadurch gekennzeichnet,**
**dass** die Hülle (9) in einem der Hülle (9) zugeordneten Abschnitt des Rohrs (8) bzw. Rohrabschnittes (8', 8") einsetzbar ist.

7. Mischvorrichtung nach Anspruch 4 oder 5,
**dadurch gekennzeichnet,**
**dass** die Hülle (9) zumindest einen radial angeordneten Flansch (12) aufweist, wodurch unterschiedliche Abgas führende Rohrabschnitte (8', 8") koppelbar sind.

8. Mischvorrichtung nach zumindest einem der Ansprüche 4 bis 7,
**dadurch gekennzeichnet,**
**dass** zumindest ein Abschnitt des Rohrs (8) bzw. des Rohrabschnittes (8', 8"), in dem sich das Mischelement (1) und/oder die Hülle (9) befindet, zumindest teilweise eine geänderte Form und/oder geänderte Größe gegenüber eines der anderen Abschnitte des Rohrs (8) bzw. Rohrabschnittes (8', 8") aufweist.

9. Mischvorrichtung nach zumindest einem der Ansprüche 4 bis 8,
**dadurch gekennzeichnet,**
**dass** die Mischvorrichtung (6) mehrere Mischelemente (1) aufweist, die insbesondere ineinander und/oder axial überlappend angeordnet sind.

10. Mischvorrichtung nach einem der Ansprüche 4 bis 9,
**dadurch gekennzeichnet,**
**dass** die Längsachse (7) des Mischelements (1) parallel zu einer Hauptströmungsrichtung (10) des Abgas führenden Rohrs (8) bzw. Rohrabschnitts (8', 8") angeordnet ist.

11. Mischvorrichtung nach Anspruch 10,
**dadurch gekennzeichnet,**
**dass** zumindest zwei solche Flügel (2) entlang der Hauptströmungsrichtung (10) quer zueinander versetzt angeordnet sind.

12. Mischvorrichtung nach Anspruch 10 oder 11,
**dadurch gekennzeichnet,**
**dass** zumindest zwei solche entlang der Hauptströmungsrichtung (10) gegenüberliegende Flügel (2) in der Hauptströmungsrichtung (10) zu unterschiedlichen Seiten (4', 4") des Verbindungsabschnittes (3) abgewinkelt sind.

13. Mischvorrichtung nach einem der Ansprüche 10 bis 12,
**dadurch gekennzeichnet,**
**dass** die Pfeilung des Verbindungsabschnittes (3) positiv oder negativ bezüglich der Hauptströmungsrichtung (10) ist.

## Claims

1. A mixing element (1) for a mixing device (6) in a pipe (8) conducting exhaust gas of an exhaust system of an internal combustion engine, with at least four vanes (2) and a connecting portion (3), which has two sides (4', 4") and from which the vanes (2) are angled,
- wherein two vanes (2) which are directly adjacent with respect to a longitudinal axis (5) of the connecting portion (3) are angled to different sides (4', 4") of the connecting portion (3),
- wherein two vanes (2) which are located directly opposite with respect to the longitudinal axis (5) of the connecting portion (3) are angled to different sides (4', 4") of the connecting portion (3),
- wherein the mixing element (1) with the connecting portion (3) and the vanes (2) is configured as a shaped sheet metal part,
**characterized in**
**that** the connecting portion (3) with respect to the longitudinal axis (7) of the mixing element (1) has an arrow shape.

2. The mixing element according to claim 1,
**characterized in**
**that** the mixing element (1) is produced from a single continuous sheet metal piece.

3. The mixing element according to claim 1 or 2,
**characterized in**
**that** at least one of the vanes (2) on an associated vane edge located outside has a contour which is formed complementarily to an inner contour of a portion of the pipe (8) or pipe portion (8', 8") associated with the respective vane (2) in such a manner that the respective vane (2) with the mixing element (1) inserted in the pipe (8) or the pipe portion (8', 8"), contacts the pipe (8) or the pipe portion (8', 8") with the vane edge.

4. A mixing device (6) for an exhaust system of an internal combustion engine, with at least one mixing element (1) according to any one of the preceding claims, which is arranged in a pipe (8) or pipe portion (8', 8") conducting exhaust gas of the mixing device or of the exhaust system.

5. The mixing device according to claim 4,
**characterized in**
**that** an envelope (9) envelopes the mixing element (1) in such a manner that at least one of the vanes (2) on an associated vane edge located outside has a contour which contacts this envelope (9).

6. The mixing device according to claim 5,
**characterized in**
**that** the envelope (9) can be inserted in a portion of the pipe (8) or pipe portion (8', 8") which is associated with the envelope (9).

7. The mixing device according to claim 4 or 5,
**characterized in**
**that** the envelope (9) comprises at least one radially arranged flange (12), as a result of which different exhaust gas-conducting pipe portions (8', 8") can be coupled.

8. The mixing device according to at least one of the claims 4 to 7,
**characterized in**
**that** at least a portion of the pipe (8) or of the pipe portion (8', 8"), in which the mixing element (1) and/or the envelope (9), at least partially has a changed shape and/or changed size compared with one of the other portions of the pipe (8) or pipe portion (8', 8").

9. The mixing device according to at least one of the claims 4 to 8,
**characterized in**
**that** the mixing device (6) has multiple mixing elements (1) which are arranged in particular within one another and/or axially overlappingly.

10. The mixing device according to any one of the claims 4 to 9,
**characterized in**
**that** the longitudinal axis (7) of the mixing element (1) is arranged parallel to a main flow direction (10) of the exhaust gas-conducting pipe (8) or pipe portion (8', 8") .

11. The mixing device according to claim 10,
**characterized in**
**that** at least two such vanes (2) are arranged transversely offset to one another along the main flow direction (10).

12. The mixing device according to claim 10 or 11,
**characterized in**
**that** at least two such vanes (2) located opposite along the main flow direction (10) are angled in the main flow direction (10) to different sides (4', 4") of the connecting portion (3).

13. The mixing device according to any one of the claims 10 to 12,
**characterized in**
**that** the arrow shape of the connecting portion (3) is positive or negative with respect to the main flow direction (10).

## Revendications

1. Elément de mélange (1) pour un dispositif de mélange (6) dans un tuyau (8) guidant les gaz d'échappement d'une installation de gaz d'échappement d'un moteur à combustion interne, comportant au moins quatre ailes (2) et une portion de liaison (3), qui présente deux côtés (4' , 4") et à partir de laquelle les ailes (2) sont coudées,
- dans lequel deux ailes (2) directement voisines par rapport à un axe longitudinal (5) de la portion de liaison (3) sont coudées par rapport aux côtés différents (4',4") de la portion de liaison (3),
- dans lequel deux ailes (2) directement en vis-à-vis par rapport à l'axe longitudinal (5) de la portion de liaison (3) sont coudées par rapport aux côtés différentes (4' ; 4") de la portion de liaison (3),
- dans lequel l'élément de mélange (1) est conçu comme une pièce façonnée en tôle avec la portion de liaison (3) et les ailes (2),
**caractérisé en**
**ce que** la portion de liaison (3) présente une flèche par rapport à l'axe longitudinal (7) de l'élément de mélange (1).

2. Elément de mélange selon la revendication 1,
**caractérisé en**
**ce que** l'élément de mélange (1) est fabriqué à partir d'une unique pièce de tôle d'un seul tenant.

3. Elément de mélange selon les revendications 1 ou 2,
**caractérisé en**
**ce qu'**au moins une des ailes (2) présente sur une arête d'aile située à l'extérieur afférente un contour extérieur, qui est façonné de manière complémentaire à un contour intérieur d'une portion du tuyau (8) ou de la portion de tuyau (8',8") coordonnée à l'aile respective (2), de telle sorte que l'aile respective (2), quand l'élément de mélange (1) est inséré dans le tuyau (8) ou dans la portion de tuyau (8',8"), contacte le tuyau (8) ou la portion de tuyau (8',8") par l'arête d'aile.

4. Dispositif de mélange (6) pour une installation de gaz d'échappement d'un moteur à combustion interne, comportant au moins un élément de mélange (1) selon une des revendications précédentes, qui est disposé dans un tuyau (8) ou une portion de tuyau (8,8')) guidant le gaz d'échappement du dispositif de mélange ou de l'installation de gaz d'échappement.

5. Dispositif de mélange selon la revendication 4,
**caractérisé en**
**ce que** une enveloppe (9) enveloppe l'élément de mélange (1) de telle sorte qu'au moins une des ailes (2) présente sur une arête d'aile située à l'extérieur afférente un contour extérieur, qui contacte cette enveloppe (9).

6. Dispositif de mélange selon la revendication 5,
**caractérisé en**
**ce que** l'enveloppe (9) peut être insérée dans une portion coordonnée à l'enveloppe (9) du tuyau (8) ou de la portion de tuyau (8',8").

7. Dispositif de mélange selon la revendication 4 ou 5,
**caractérisé en**
**ce que** l'enveloppe (9) présente au moins une bride (12) disposée radialement, moyennant quoi les différentes portions de tuyau (8',8") guidant le gaz d'échappement peuvent être couplées.

8. Dispositif de mélange selon au moins une des revendications 4 à 7,
**caractérisé en**
**ce que** au moins une portion de tuyau (8) ou de la portion de tuyau (8',8"), dans laquelle l'élément de mélange (1) et/ou l'enveloppe (9) se trouve, présente une forme et/ou une taille au moins partiellement modifiée par rapport à une des autres portions du tuyau (8) ou de la portion de tuyau (8',8").

9. Dispositif de mélange selon au moins une des revendications 4 à 8,
**caractérisé en**
**ce que** le dispositif de mélange (6) présente plusieurs éléments de mélange (1), qui sont disposés notamment l'un dans l'autre et/ou en se chevauchant axialement.

10. Dispositif de mélange selon une des revendications 4 à 9,
**caractérisé en**
**ce que** l'axe longitudinal (7) de l'élément de mélange (1) est disposé parallèlement à une direction d'écoulement principale (10) du tuyau (8) ou de la portion de tuyau (8',8") guidant les gaz d'échappement.

11. Dispositif de mélange selon la revendication 10,
**caractérisé en**
**ce que** au moins deux telles ailes (2) sont disposées en décalage transversal l'une par rapport à l'autre le long de la direction d'écoulement principale (10).

12. Dispositif de mélange selon les revendications 10 ou 11,
**caractérisé en**
**ce que** au moins deux telles ailes (2) en vis-à-vis le long de la direction principale d'écoulement (10) sont coudées dans la direction d'écoulement principale (10) par rapport aux différents côtés (4',4") de la portion de liaison (3).

13. Dispositif de mélange selon une des revendications 10 à 12,
**caractérisé en**
**ce que** la flèche de la portion de liaison (3) est positive ou négative par rapport à la direction principale d'écoulement (10).
